# EUROPEAN PATENT APPLICATION

(11) **EP 4 598 136 A1**
(43) Date of publication of application: **06.08.2025**
(21) Application number: 23872033.8
(22) Date of filing: 19.09.2023
(51) Int. Cl.: H04W 48/08, H04W 16/26, H04W 48/06, H04W 48/10, H04W 48/14, H04W 48/16

(54) **COMMUNICATION DEVICE, CONTROL METHOD, AND PROGRAM**

(30) Priority: 26.09.2022 JP 2022152857; 03.02.2023 JP 2023015589
(71) Applicant: CANON KABUSHIKI KAISHA, Tokyo 146-8501 (JP)
(72) Inventor: MAEDA Yoichi, Tokyo 146-8501 (JP)
(74) Representative: Canon Europe Limited
(86) International application number: PCT/JP2023/033874
(87) International publication number: WO 2024/070805

(57) **Abstract**

A communication apparatus functions as a base station that performs cellular communication with user equipment (UE). In a case where the number of connections to the base station provided by the communication apparatus itself reaches an upper limit of the number of connections, the communication apparatus notifies outside of information indicating that the upper limit of the number of connections is reached.

## Description

### Technical Field

The present invention relates to a communication apparatus that performs wireless communication, a control method, and a program.

### Background Art

The 3rd Generation Partnership Project (3GPP (registered trademark)) formulates a cellular communication standard. In the cellular communication standard in the 3GPP (hereinafter referred to as the "3GPP standard"), the standardization of Integrated Access and Backhaul (IAB) obtained by integrating an access line and a backhaul line is progressing (see patent literature 1).

In IAB, a wireless resource used for an access line between a base station and a user terminal (user equipment (UE)) is also used for a backhaul line. For example, in IAB, a wireless resource having a millimeter-wave band such as the 28 GHz band can be used. By using IAB, a relay apparatus (an IAB node) can relay communication between a base station apparatus (an IAB donor) and a terminal apparatus via a wireless line. Thus, it is possible to inexpensively expand area coverage compared to a case where a wired line such as optical fibers is used.

In cellular communication, an informing technique is known in which a base station cell notifies a UE of access prohibition information to appropriately prohibit access to the base station cell of which the function can be limited (patent literature 2).

### Citation List

### Patent Literature

PTL 1: Japanese Patent Laid-Open No. 2019-534625
PTL 1: Japanese Patent Laid-Open No. 2019-36869

### Summary of Invention

### Technical Problem

Incidentally, it is possible that an in-vehicle relay apparatus (hereinafter also referred to as an "in-vehicle relay", "Vehicle Mounted Relay", or "mobile IAB") obtained by mounting a relay apparatus that functions as an IAB node on a vehicle such as a bus, a train, or a taxi is newly used. By using this in-vehicle relay, it is possible that an coverage area in a city area is expanded.

On the other hand, in a case where the in-vehicle relay is used, it is considered that a variety of issues arise that are not solved only with the specification of a cellular communication standard that is formulated up to Release 17 and assumes an IAB node and a fixed base station premised on fixed installation at certain locations.

For example, since it is assumed that the in-vehicle relay is mounted on a vehicle, there is a possibility that the processing capability of the in-vehicle relay is low compared to that of a conventionally known fixedly installed IAB donor due to a reduction in weight and power consumption cost. The in-vehicle relay performs backhaul communication with an IAB node and an IAB donor that are superior while moving in an area. Thus, the in-vehicle relay has a characteristic in which communication demand dynamically changes according to the movement compared to a conventionally known communication condition that base stations are fixedly installed based on the prediction of communication demand, and these base stations cover communication of a UE.

In view of these characteristics, in the present exemplary embodiment, it is possible that the upper limit of the number of connections is provided for a base station typified by an in-vehicle relay to stably provide a communication service to a UE.

However, a conventional cellular communication standard does not define a specific mechanism for giving a notification that the upper limit of the number of connections is reached. Thus, both a base station and a UE may wastefully consume power and resources by the UE trying or retrying a connection to the base station in which the upper limit of the number of connections is reached.

The present invention is made in view of at least one of the above issues. As one aspect of the present invention, one of the purposes is to provide a mechanism for notifying outside of information indicating that the upper limit of the number of connections is reached in a base station. As another aspect of the present invention, one of the purposes is to increase the convenience of cellular communication.

### Solution to Problem

To achieve at least one of the above purposes, according to an aspect of the present invention, a communication apparatus that functions as a base station that performs cellular communication with user equipment (UE) includes a notification unit configured to, in a case where the number of connections to the base station reaches an upper limit of the number of connections, notify outside of information indicating that the upper limit of the number of connections is reached.

### Advantageous Effects of Invention

According to one aspect of the present invention, it is possible to notify outside of information indicating that the upper limit of the number of connections is reached in a base station. According to another aspect of the present invention, it is possible to improve the convenience of cellular communication.

### Brief Description of Drawings

[Fig. 1] Fig. 1 is a diagram illustrating an example of a communication system.
[Fig. 2] Fig. 2 is a diagram illustrating an example of a hardware configuration of an Integrated Access and Backhaul (IAB) node.
[Fig. 3] Fig. 3 is a diagram illustrating an example of a functional configuration of the IAB node.
[Fig. 4] Fig. 4 is a diagram illustrating an example of a functional configuration of user equipment (UE).
[Fig. 5] Fig. 5 is a sequence diagram illustrating a flow of a connection process in cellular communication.
[Fig. 6] Fig. 6 is a diagram illustrating an example of control executed by an IAB node.
[Fig. 7] Fig. 7 is a diagram illustrating an example of control executed by a UE.
[Fig. 8] Fig. 8 is an example of a Radio Resource Control (RRC) Reject message.
[Fig. 9] Fig. 9 is a diagram illustrating an example of control executed by an IAB node according to a second exemplary embodiment.
[Fig. 10] Fig. 10 is a diagram illustrating an example of control executed by a UE according to the second exemplary embodiment.
[Fig. 11] Fig. 11 is a diagram illustrating an example of informing information of which the IAB node informs outside.
[Fig. 12] Fig. 12 is a schematic diagram illustrating switching of a connection destination in a communication system.
[Fig. 13] Fig. 13 is an example of a sequence diagram illustrating exchange of information between apparatuses according to a third exemplary embodiment.
[Fig. 14] Fig. 14 is a diagram illustrating an example of control executed by an IAB node according to the third exemplary embodiment.
[Fig. 15] Fig. 15 is a diagram illustrating an example of control executed by a UE according to the third exemplary embodiment.

### Description of Embodiments

Exemplary embodiments for carrying out the present invention will be described below with reference to the drawings. The following exemplary embodiments do not limit the invention according to the appended claims, and not all the combinations of the features described in mobile implementation are essential for a method for solving the issues in the present invention.

### <First Exemplary Embodiment>

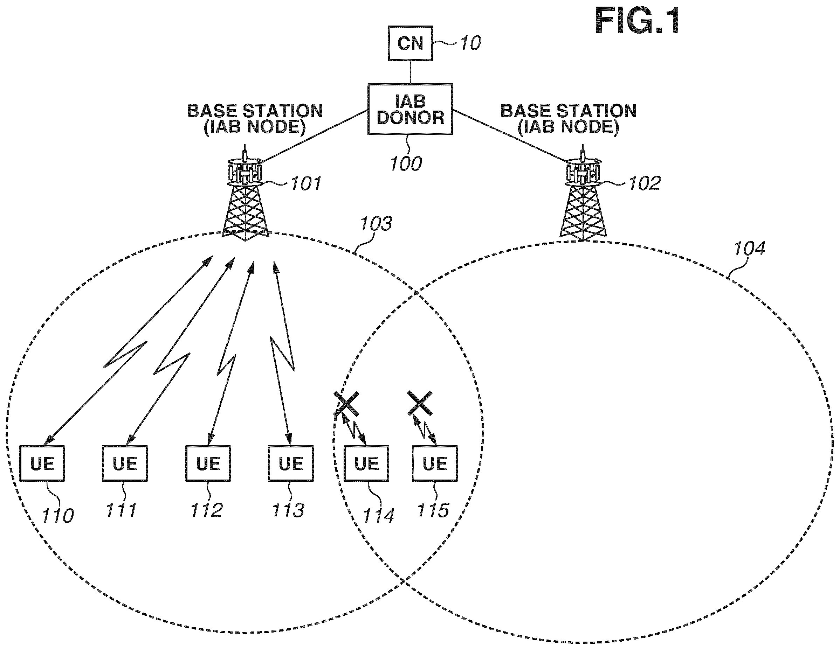

First, with reference to Fig. 1, a mobile communication system according to the present exemplary embodiment is described. The mobile communication system according to the present exemplary embodiment includes a core network (CN) 10, an Integrated Access and Backhaul (IAB) donor 100, wireless base stations 101 and 102 as IAB nodes, and user equipment (UEs) 110 to 115. "UE" is the abbreviation of user equipment and is a communication terminal such as a smartphone or a personal computer. Each of the wireless base stations 101 and 102 as IAB nodes may be an in-vehicle wireless base station obtained by mounting a relay apparatus that functions as an IAB node on a vehicle such as a bus, a train, or a taxi.

The wireless base stations 101 and 102 as IAB nodes are connected to the CN 10 via the IAB donor 100 that is a superior node by establishing communication with the IAB donor 100 via a backhaul line utilizing a wireless resource based on fifth generation (5G) New Radio (NR).

The IAB node 101 that is a wireless base station forms a cell 103 as a coverage area. The CN 10 and the IAB donor 100 perform various processes such as the authentication of the UEs 110 to 115 that are terminals, transfer control of a packet, and the establishment of a communication path. For illustrative purposes, Fig. 1 illustrates a case where the UEs 110 to 115 are present in the cell 103, and a total of four UEs, namely the UEs 110 to 113, are connected to the IAB node 101. The IAB node 102 that is a wireless base station forms a cell 104 as a coverage area.

In the present exemplary embodiment, to stably provide a communication service to a UE, a configuration is employed in which the upper limit of the number of connections to an IAB node such as an in-vehicle relay can be set for each of the IAB nodes 101 and 102 as wireless base stations. Fig. 1 illustrates a case where the maximum number of connections of UEs that can be connected to the IAB node 101 is set to four. If UEs that are being connected do not reach the upper limit of the number of connections, the IAB node cooperates with the CN 10 and the IAB donor 100 to establish connections with the UEs based on connection requests from the UEs.

Incidentally, a conventional cellular communication standard does not define a mechanism for appropriately giving a notification that the upper limit of the number of connections is reached. In the present exemplary embodiment, to prevent an IAB node and a UE from wastefully consuming power and resources by the UE trying or retrying a connection to the IAB node in which the upper limit of the number of connections is reached, a mechanism for giving a notification of this information is provided.

A more specific description is given. In the state where the four UEs are connected to the IAB node 101 as illustrated in Fig. 1, if the UEs 114 and 115 attempt connections to the IAB node 101 fifth and later, control is performed to prevent the establishment of the connections because the maximum number of connections (four) is already reached in the IAB node. Then, in a case where these connections are not established, the UEs that do not establish the connections are notified that the cause of the failure of the connections is the state where the maximum number of connections is reached. By this processing, it is possible to prevent an unnecessary connection from being retried.

Specific configurations for achieving this processing will be described below.

### <Hardware Configuration>

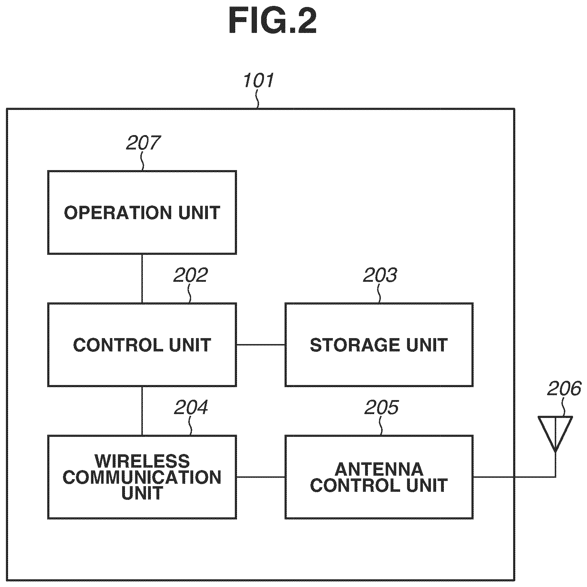

With reference to Fig. 2, the hardware configuration of the IAB node 101 is described. Fig. 2 is a block diagram illustrating an example of the hardware configuration of the IAB node 101.

The IAB node 101 includes a control unit 202, a storage unit 203, a wireless communication unit 204, an antenna control unit 205, an antenna 206, and an operation unit 207. Although a phased array antenna is assumed as the antenna, the present invention is not limited to this.

The storage unit 203 includes one or more memories such as a read-only memory (ROM) and a random-access memory (RAM). The storage unit 203 stores computer programs for performing various operations described below, communication parameters for wireless communication, and management information regarding a UE connected to the IAB node. The storage unit 203 also functions as a temporary storage area (work area) for data to be transferred from the IAB node to each UE via the IAB donor 100 and the CN 10.

As the storage unit 203, a storage medium such as a hard disk or a non-volatile memory may be used in addition to the memories such as the ROM and the RAM. Alternatively, the storage unit 203 may include a plurality of memories.

The control unit 202 includes one or more processors such as a central processing unit (CPU) and a microprocessor unit (MPU) and controls the entirety of the IAB node 101 by executing a computer program loaded into the RAM that is the storage unit 203. The control unit 202 may control the entirety of the IAB node 101 by the cooperation of a computer program and an operating system (OS) stored in the storage unit 203.

Processing performed by the control unit 202 described with reference to flowcharts described below is also achieved by executing a computer program loaded into the RAM that is the storage unit 203. The processing described with reference to the flowcharts described below can also be achieved using a hardware circuit such as an application-specific integrated circuit (ASIC) or a field-programmable gate array (FPGA). The processing described with reference to the flowcharts described below can also be achieved by the cooperation of the hardware circuit and the processors such as the CPU and the MPU.

The wireless communication unit 204 is a module that cooperates with the control unit 202, the antenna control unit 205, and the antenna 206 to perform transmission and reception through cellular communication based on long-term evolution (LTE) and 5G NR compliant with the 3rd Generation Partnership Project (3GPP) standard. Although in the present exemplary embodiment, a case is illustrated where the communication unit 204 supports wireless communication compliant with LTE and 5G NR, the present invention is not limited to this. For example, the communication unit 204 may support wireless communication compliant with sixth generation (6G) and Beyond 5G that are succession standards of 5G NR. The wireless communication unit 204 also has a measurement function for measuring the communication state with each UE or each base station.

The antenna control unit 205 controls the directionality of the antenna 206, transmits a wireless signal generated by the wireless communication unit 204 to a UE using a technique such as beam forming or multiple-input and multiple-output (MIMO), or receives a wireless signal transmitted from a UE and transmits the wireless signal to the wireless communication unit 204.

The operation unit 207 includes a touch panel that can detect a touch operation of a user, and a display panel that displays various screens. The operation unit 207 functions as a display unit that displays information, and a reception unit that receives an instruction from the user. The control unit 202 cooperates with the operation unit 207 to display a setting screen for making various settings of the IAB node. The user can input a desired operation instruction to the IAB node 101 by performing a touch operation using an object such as a finger on the operation unit 207. The display unit may be an external display device separate from the IAB node, or the reception unit may be an input device such as a keyboard and a mouse.

The hardware configurations of the IAB donor 100, the IAB node 102, and the UEs 110 to 115 are similar to that of the IAB node 101, and therefore are not described.

### <Software Configuration>

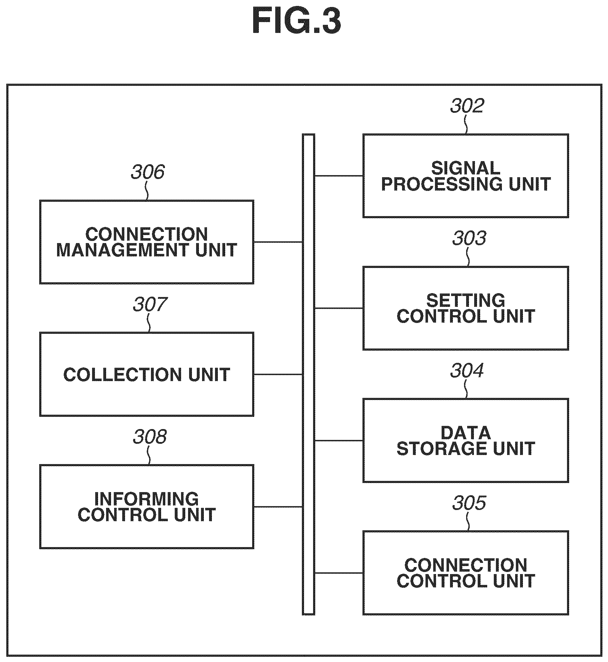

Next, with reference to Fig. 3, the functional configuration of each of the IAB nodes 101 and 102 is described. Functional units illustrated in Fig. 3 illustrate software components. The functional units are achieved by the processors of the control unit 202 executing computer programs for achieving the functional units saved in the storage unit 203.

A signal processing unit 302 cooperates with the wireless communication unit 204 to transmit data obtained by decoding a signal for cellular communication compliant with 5G or LTE received by the wireless communication unit 204 to another functional unit. The processing unit 302 also cooperates with the wireless communication unit 204 to transmit a signal compliant with 5G or LTE obtained by encoding and modulating data as a transmission target requested by another functional unit to outside.

A data storage unit 304 manages system information such as cell information for causing the apparatus to operate as an IAB node, communication parameters, and setting information for communication and saves the system information in the storage unit 203. Based on a change request from another functional unit, the storage unit 304 updates the setting information managed by the storage unit 304 itself, or based on a setting reference request from another functional unit, provides the setting information managed by the storage unit 304 itself to another functional unit. The storage unit 304 also manages information indicating the upper limit of the number of connections indicating the upper limit of the number of UEs that can be connected to the IAB node 101.

A setting control unit 303 cooperates with the operation unit 207 and the storage unit 304 to perform a change process for changing settings stored in the storage unit 304. The setting control unit 303 generates a setting screen including display items such as an entry field for changing the upper limit of the number of connections of UEs and displays the setting screen on the operation unit 207. If the user provides an input to the entry field displayed on the setting screen and the setting control unit 303 determines that a user operation for changing the upper limit of the number of UEs that can be connected is received, the setting control unit 303 transmits to the storage unit 304 a change request for updating the upper limit of the number of connections managed by the storage unit 304 with the value input to the entry field. The storage unit 304 having received the change request updates the upper limit of the number of connections. Although in the present exemplary embodiment, a case has been illustrated where the upper limit of the number of connections is updated via the operation unit of the IAB node as an example, the present invention is not limited to this. For example, a configuration can also be employed in which an instruction to change the upper limit of the number of connections is received from an orchestrator on the CN 10 or the IAB donor 100 that performs overall control of IAB communication, and the upper limit of the number of connections is updated based on this instruction.

A connection control unit 305 cooperates with the signal processing unit 302 and the wireless communication unit 204 to perform various processes for establishing and disconnecting connections with a UE and the IAB donor. The control unit 305 generates and transmits a Radio Resource Control (RRC) message for exchanging information regarding a wireless connection with the UE and a Backhaul Adaptation Protocol (BAP) message for exchanging information between the IAB node and the donor. "BAP" is the abbreviation of Backhaul Adaptation Protocol and is a protocol for routing data between nodes. The control unit 305 also analyzes a message received from outside, generates a UE context necessary to maintain a connection with a UE, and transfers the UE context to a connection management unit 306. According to the occurrence of a disconnection process, the control unit 305 also requests the connection management unit 306 to release an unnecessary UE context. The connection management unit 306 performs overall management of information regarding currently connected UEs, such as UE contexts of UEs that are being connected under control of the connection management unit 306 itself, and the number of currently connected UEs.

The connection control unit 305 refers to the information regarding the upper limit of the number of connections managed by the storage unit 304 and the number of UEs that are being connected managed by the management unit 306. If the connection control unit 305 receives a connection request from a UE, the connection control unit 305 determines whether the upper limit of the number of connections is reached in the connection control unit 305 itself. If the upper limit of the number of connections is reached, the connection control unit 305 generates a message that rejects the connection request, and notifies the UE of the message. In the present exemplary embodiment, the connection control unit 305 includes information indicating that the cause of the failure of the connection is the state where the maximum number of connections is reached in the notification. The details will be described with reference to flowcharts described below.

Further, based on a congestion state due to traffic load or an apparatus state such as the state where the base station is being stopped due to a breakdown, the control unit 305 can also determine whether to accept or refuse the connection request from the UE, and perform processing according to the determination. The control unit 305 also has the functions of performing admission control, managing states, and notifying the surroundings of peripheral cell information.

As described above, the control unit 305 and the management unit 306 provide functions regarding so-called Radio Resource Management (RRM) and RRC. The software configuration of the IAB node 102 is similar to that of the IAB node 101. The software configuration of the IAB donor 100 is different from the configuration of the IAB node 101 in that the IAB donor 100 includes a functional unit for communicating with a CN such as the CN 10 in addition to the configuration of the IAB node 101.

A collection unit 307 cooperates with the signal processing unit 302 and the wireless communication unit 204 to receive a signal emitted from an IAB donor, an IAB node, or a fixed base station adjacent to the IAB node 101 and collect and manage information regarding a surrounding base station. At this time, the collection unit 307 also measures the quality such as the received signal strength of the signal and stores the measured quality in association with the information regarding the surrounding base station. The information is appropriately referred to by the control unit 305. Based on the referred-to information, the control unit 305 determines whether it is necessary to perform a handover process, or generates various messages for causing a handover process.

Based on the system information managed by the storage unit 304, an informing control unit 308 generates information to be transmitted using a Physical Broadcast Channel (PBCH) block that informs a UE of the minimum information that the UE is to read first after searching for a cell. The informing control unit 308 also generates information to be transmitted using a System Information Block (SIB) that informs outside of other system information. The informing control unit 308 also cooperates with the signal processing unit 302, the wireless communication unit 204, and the antenna control unit 205 to transmit an SS/PBCH block including a PBCH that is channel informing information and an SIB that stores system information of which a UE is to be informed to outside in a constant transmission cycle. An SS/PBCH block that is a set of pieces of synchronization information including a PBCH and an SIB is also referred to as a "Synchronization Signal Block (SSB)".

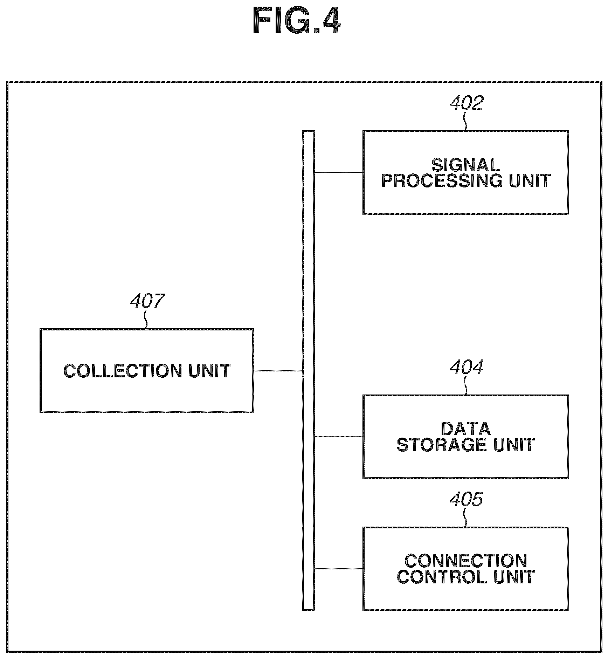

Next, the functional configuration of each of the UEs 110 to 115 is described. Functional units illustrated in Fig. 4 illustrate software components. The functional units are achieved by the processors of the control unit 202 of each UE executing computer programs for achieving the functional units saved in the storage unit 203 of the UE.

A signal processing unit 402 cooperates with the wireless communication unit 204 of the UE to transmit data obtained by decoding a signal for cellular communication compliant with 5G NR or LTE emitted from a base station and received by the wireless communication unit 204 of the UE to another functional unit. The processing unit 402 also cooperates with the wireless communication unit 204 of the UE to transmit a signal compliant with 5G NR or LTE obtained by encoding and modulating data as a transmission target requested by another functional unit to an external base station.

A data storage unit 404 manages connection parameters for use in a connection with a base station and setting information for communication and saves the connection parameters and the setting information in the storage unit 203 of the UE. Based on a change request from another functional unit, the data storage unit 404 also updates the setting information managed by the data storage unit 404 itself, or based on a setting reference request from another functional unit, provides the setting information managed by the data storage unit 404 itself to another functional unit. The storage unit 404 manages and stores a public land mobile network (PLMN) and contract information for identifying the carrier (the telecommunications carrier) of a connection destination.

A collection unit 407 cooperates with the signal processing unit 402 and the wireless communication unit 204 of the UE to receive a signal emitted from an IAB donor, an IAB node, or a fixed base station adjacent to the UE and collect and manage information regarding a surrounding base station. At this time, the collection unit 407 also measures the quality such as the received signal strength of the signal and stores the measured quality in association with the information regarding the surrounding base station. The information is appropriately referred to by a connection control unit 405.

The connection control unit 405 refers to the information managed by the collection unit 407 and the information managed by the storage unit 404 and performs a selection process for selecting a base station as a connection destination and a determination process for determining whether to request a base station to perform a handover process. Specifically, among base stations of a carrier as a target of a connection identified based on the contract information and the PLMN, the control unit 405 selects a base station in which the received signal strength of a signal emitted from the base station exceeds a predetermined threshold and the received signal strength is high as a connection destination.

The control unit 405 transmits a connection request to the selected base station as the connection destination and attempts a connection to the base station such as the IAB node 101 or 102. As an example, a case is described where the control unit 405 connects to the IAB node 101. If the connection to the IAB node 101 is completed as a result of attempting the connection, the UE can communicate with an external apparatus and a web server on the Internet via the IAB node 101, the IAB donor 100, and the CN 10.

### <Connection Establishment Process>

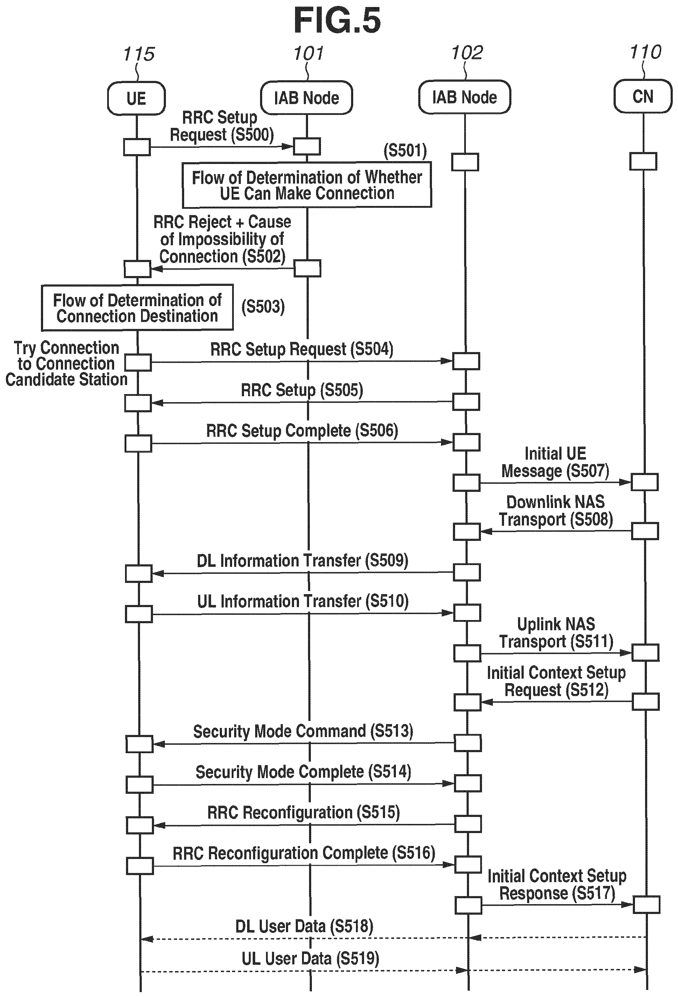

Next, with reference to a sequence diagram in Fig. 5, a method for avoiding a retry according to the present exemplary embodiment is described. Sequences in Fig. 5 illustrate control of the apparatuses in a case where a UE makes a connection request to a base station as a connection destination candidate. Fig. 5 illustrates control in a case where UEs that are being connected to the IAB node 101 already reach the upper limit of the number of connections.

First, in step S500, the UE transmits an RRC Setup Request message that requests the IAB node 101 to set up a connection.

In step S501, based on the upper limit of the number of connections and the number of currently connected UEs, the IAB node 101 having received the RRC Setup Request message determines whether to permit or refuse the connection. If it is determined that the connection is permitted, the IAB donor 100, the CN 10, and the UE exchange information using an RRC message and a BAP message (not illustrated), whereby the IAB node 101 establishes the connection with the UE. For example, this connection follows the procedure of the UE connection establishment described in section 9.2.1.3 of TS 38.300 formulated by the 3GPP.

If, on the other hand, it is determined that the connection is permitted, then in step S502, the IAB node 101 transmits an RRC Reject message including a parameter indicating the cause of the impossibility of the connection to the UE. The parameter includes information indicating that the connection is not made because the upper limit of the number of connections is reached. The RRC Reject message can also include information indicating a base station as a connection candidate. The details will be described below.

In step S503, the UE having received the RRC Reject message transmitted from the IAB node 101 in step S502 performs a determination process for determining a connection destination. If the RRC Reject message does not indicate the cause of the impossibility of the connection, the UE performs a retry process for retrying the connection to the IAB node 101. If the retry fails multiple times, the UE abandons the connection to the IAB node and attempts a connection to another IAB node or base station. If, on the other hand, the RRC Reject message indicates the cause of the impossibility of the connection and indicates information indicating that the connection is not made, the UE determines that another IAB node or base station is a connection destination. A description is given on the assumption that the IAB node 102 is selected.

If the connection destination is determined in the process of step S503, then in step S504, the UE transmits an RRC Setup Request message to the IAB node 102.

The IAB node 102 having received the RRC Setup Request message executes the flow of a determination (not illustrated), thereby determining whether to permit or refuse the connection. This determination is a determination similar to that in step S5501. This sequence illustrates a case where it is determined that the connection is permitted by the determination. If it is determined that the connection is permitted, then in step S505, the IAB node 102 transmits an RRC Setup message to the UE having requested the connection. In step S506, the UE having received the RRC Setup message transmits an RRC Setup Complete message to the IAB node 102.

Next, the IAB node 102 having received the RRC Setup Complete message performs a setup process for setting up cellular communication in which the UE cooperates with the IAB donor and the CN 10 that are superior nodes of the IAB node 102. Although in the present exemplary embodiment, the IAB donor is not illustrated due to space limitations, the IAB node and the IAB donor cooperate with each other to exchange data with the CN 10.

The UE having established the connection with the IAB node 102 transmits a nonaccess stratum (NAS) message (not illustrated) to the IAB node 102. Next, in step S507, the IAB node 102 transmits Initial UE Message including the NAS message from the UE to the CN 10. Then, in step S508, the IAB node 102 exchanges information required for the setup using Downlink NAS Transport. In step S509, the IAB node 102 exchanges information required for the setup using DL Information Transfer. Further, in step S510, the IAB node 102 exchanges information required for the setup using UL Information Transfer. In step S511, the IAB node 102 exchanges information required for the setup using Uplink NAS Transport.

Next, in step S512, the CN 10 transmits Initial Context Setup Request including a protocol data unit (PDU) session context, a UE wireless function, and UE security to the IAB node 102. Parameters for managing the connection state with the UE typified by this context are appropriately managed by the connection management unit 306. Next, in step S513, the IAB node 102 transmits Security Mode Command to the UE. The UE having received the Security Mode Command updates a security algorithm used for communication and a key used for cryptographic communication. If the updates are completed, then in step S514, the UE transmits Security Mode Complete to the IAB node 102. By these processes, it is possible to encrypt and decrypt data that flows through a cellular communication network. Thus, it is possible to perform secure communication.

In step S515, the IAB node 102 having received the Security Mode Complete transmits an RRC Reconfiguration message to the UE.

The UE having received the RRC Reconfiguration message performs a process required for the setup such as the configuration of Radio Bearers according to this configuration. If the configuration is completed, then in step S516, the UE transmits an RRC Reconfiguration Complete message to the IAB node 102. By the above procedure, it is possible to set Signal Radio Bearer (SRB) 2 and Data Radio Bearer (DRB) of the UE.

Finally, in step S517, the IAB node 102 notifies the CN 10 that the setup procedure is completed, using Initial Context Setup Response.

By the above processing, the setup is completed. If the setup is completed, then in step S518, the UE can communicate downlink user plane data with the CN 10 via the IAB node 102 and the IAB donor 100. In step S519, the UE can communicate uplink user plane data with the CN 10 via the IAB node 102 and the IAB donor 100.

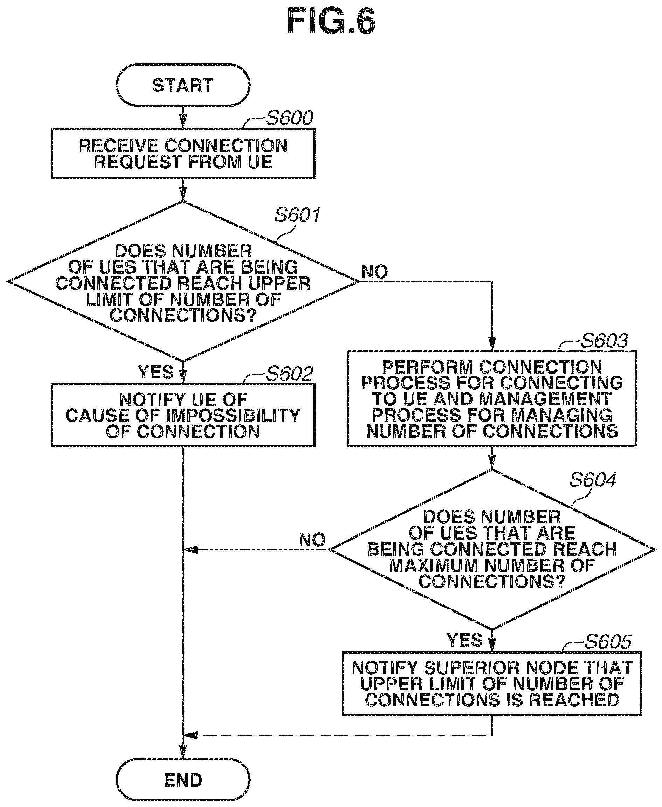

Next, with reference to Fig. 6, a description is given of a determination process for determining a connection in an IAB node having received a connection request. A flowchart in Fig. 6 selectively illustrates the process of handling a connection request in the IAB node. The processing illustrated in the flowchart is achieved by the control unit 202 of the IAB node executing a program. In a case where it is to be clearly indicated what performs the processing, the description is given using a functional unit described with reference to Fig. 3 as the subject.

In step S600, the signal processing unit 302 and the connection control unit 305 cooperate to receive a connection request from a UE. If the signal processing unit 302 and the connection control unit 305 receive the connection request, the processing proceeds to step S601.

Next, in step S601, based on the number of connections indicating the number of currently connected UEs managed by the connection management unit 305 and the information regarding the upper limit of the number of connections managed by the setting control unit 303, the connection control unit 305 determines whether the number of UEs that are being connected reaches the upper limit of the number of connections. If it is determined that the number of UEs that are being connected reaches the upper limit of the number of connections, the processing proceeds to step S602. If it is determined that the number of UEs that are being connected does not reach the upper limit of the number of connections, the processing proceeds to step S603.

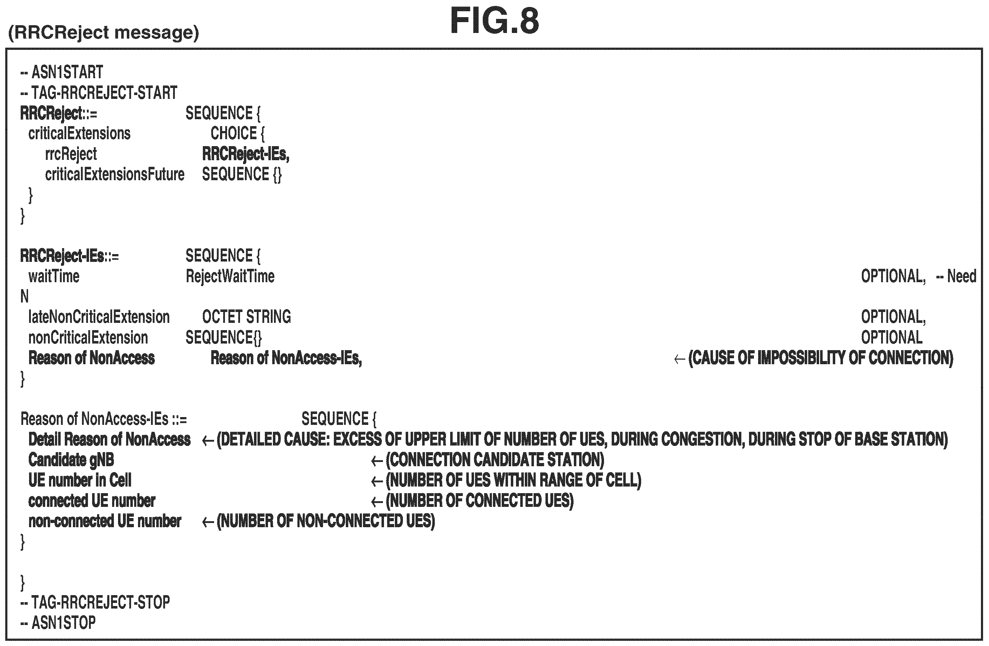

In step S602, the connection control unit 305 cooperates with the signal processing unit 302 to transmit an RRC Reject message including a parameter indicating the cause of the impossibility of the connection to the UE from which the connection request is received in step S601. With reference to Fig. 8, the RRC Reject message transmitted in step S602 is described. Fig. 8 illustrates an example of the RRC Reject message.

The message in Fig. 8 is an RRC Reject message obtained by extending the message format of the RRC Reject described in section 6.2.2 of TS 38.331 of the 3GPP. In Fig. 8, the format of the message is indicated by the notation based on Abstract Syntax Notation One (ASN.1).

In the present exemplary embodiment, the structure of "Reason of NonAccess-IEs" that enumerates information indicating the cause of the impossibility of the connection and hint information in a case where the connection is impossible is added to the structure members of "RRC Reject-IEs". "IEs" is the abbreviation of Infomation Elements and means information elements that are to be included in the message.

First, the information indicating the cause of the impossibility of the connection is stored in "Detail Reason of NonAccess". In this area, the information indicating the cause of the impossibility of the connection, such as "excess of upper limit of number of UEs", "during congestion", or "during stop of base station" is stored. "Excess of upper limit of number of UEs" is information indicating that the connection cannot be made because the number of UEs that are being connected reaches the upper limit of the number of connections. "During congestion" is information indicating that the connection cannot be made because congestion is occurring. Based on the securement state of a communication band in admission control or the occurrence situation of an error in a communication path, the connection control unit 305 determines whether congestion is occurring. If it is determined that congestion is occurring, the connection control unit 305 stores the information indicating that congestion is occurring. If it is not determined that congestion is occurring, the connection control unit 305 does not store the information indicating that congestion is occurring.

"During stop of base station" is information indicating that a service is being stopped because normal communication cannot be provided by the base station due to some problem. The actually stored value may be a numerical value defined in advance in association with this information. For example, two bits are secured as a bit sequence corresponding to "Detail Reason of NonAccess". Then, "0b00" is associated with "excess of upper limit of number of UEs", "0b01" is associated with "during congestion", "0b10" is associated with "during stop of base station", and "0b11" is associated with a reservation value, whereby the information regarding the cause of the impossibility of the connection is conveyed between apparatuses.

Subsequent information included in "Reason of NonAccess-IEs" is the hint information in a case where the connection is impossible. "Candidate gNB" is information indicating a base station as a connection candidate. In "Candidate gNB", the identifier (ID) of a base station that is to be a connection candidate is stored. In "UE number in Cell", the number of UEs present within the range of the cell is stored. In "connected UE number", the number of UEs that are being connected to the IAB node is stored. In "non-connected UE number", the number of UEs within the range of the cell that are not being connected to the IAB node is stored. Although in the present exemplary embodiment, a case is illustrated where the hint information is included as an example, whether to provide the hint information may vary based on the setting of the base station.

For example, the base station can also be configured not to provide the hint information.

The description returns to Fig. 6. In step S603, the connection control unit 305 cooperates with components to perform a connection process for connecting to the UE, thereby causing the UE to join the CN 10. At this time, the connection control unit 305 performs the process of transferring the context of the UE to the connection management unit 306. The management unit 306 updates the management of the number of connections indicating the number of terminals currently connected to the IA node. The number of connections is updated by incrementing the value indicating the number of connections currently connected to the IAB node. Although not illustrated due to space limitations, if the number of UEs that are being connected decreases according to disconnection, the number of connections is updated by decrementing the value indicating the number of connections.

Next, in step S604, based on the number of connections indicating the number of currently connected UEs managed by the connection management unit 306 and the information regarding the upper limit of the number of connections managed by the setting control unit 303, the connection control unit 305 determines whether the number of UEs that are being connected reaches the upper limit of the number of connections. If it is determined that the upper limit of the number of connections is reached, the processing proceeds to step S605. If it is not determined that the upper limit of the number of connections is reached (i.e., if the upper limit of the number of connections is not reached), the series of operations in the process of handling the connection request ends.

In step S605, the connection control unit 305 cooperates with the signal processing unit 302 to notify a superior node that the upper limit of the number of connections is reached. For example, the superior node is the IAB donor 100. This notification can be given using a BAP message. Further, the connection control unit 305 may cooperate with the signal processing unit 302 to notify the superior node of information indicating the radio wave condition of a peripheral communication apparatus and information regarding the UEs that are being connected to the base station, using a BAP message. The information of which the IAB donor 100 is notified using this BAP message is used to control the load distribution of the IAB donor. The IAB donor 100 can also be configured to further notify the CN 10 of the pieces of information of which the IAB donor 100 is notified. An orchestrator that performs overall management of communication via a cellular network on the CN 10 is notified of the pieces of information of which the IAB donor 100 is notified, and the pieces of information are used to control the load distribution of the entirety of the cellular communication network.

By the above processing, it is possible to notify the UE of the cause of the impossibility of the connection.

By notifying the superior node that the upper limit of the number of connections is reached, it is also possible to immediately notify the IAB donor 100 and the CN 10 of this information. This information can be appropriately utilized to control the load distribution.

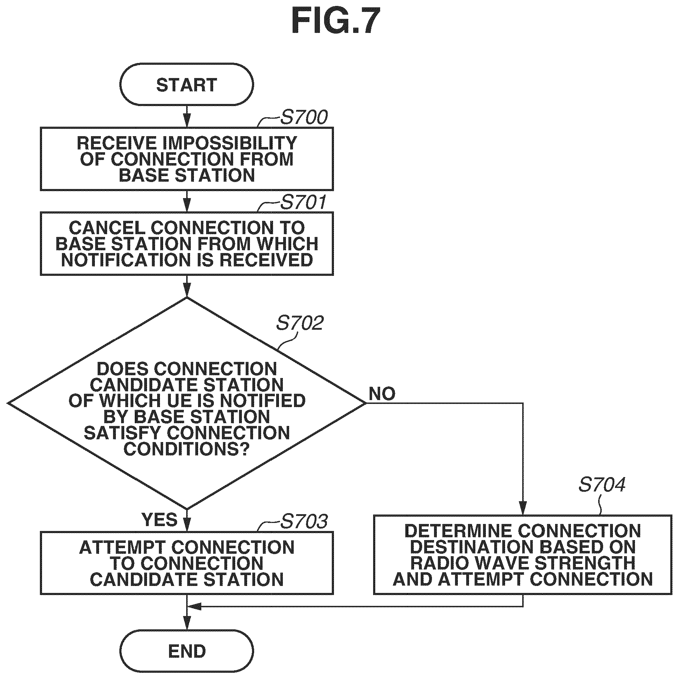

Next, with reference to a flowchart in Fig. 7, a description is given of control of a UE having received a message including the cause of the impossibility of a connection. The flowchart in Fig. 7 selectively illustrates the process of handling a connection request in the UE. The processing illustrated in the flowchart is achieved by the control unit 202 of the UE executing a program. In a case where it is to be clearly indicated what performs the processing, the description is given using a functional unit described with reference to Fig. 4 as the subject.

In step S700, the connection control unit 405 cooperates with the signal processing unit 402 to receive an RRC Reject message. If the reception is completed, the processing proceeds to step S701. In step S701, the connection control unit 405 cancels a connection to a base station from which the notification is received. Then, the processing proceeds to step S702. In step S702, the connection control unit 405 cooperates with the collection unit 407 to determine whether a connection candidate station of which the connection control unit 405 is notified by the base station satisfies connection conditions. Specifically, if the connection control unit 405 is not notified of a connection candidate station by the base station, or if the communication quality of a connection candidate station of which the connection control unit 405 is notified is less than or equal to a threshold, it is determined that the connection conditions are not satisfied. Then, the processing proceeds to step S704.

If, on the other hand, the connection control unit 405 is notified of a connection candidate station by the base station, and the communication quality of the connection candidate station of which the connection control unit 405 is notified is excellent, it is determined that the connection conditions are satisfied. Then, the processing proceeds to step S703.

In step S703, the connection control unit 405 attempts a connection to the connection candidate station.

On the other hand, in step S704, the connection control unit 405 determines as a connection destination a base station that is a surrounding base station collected by the collection unit 407 and has the greatest received radio wave strength among base stations having received radio wave strengths greater than a predetermined threshold. Then, the connection control unit 405 attempts a connection to the determined connection destination. After excluding the base station having notified the connection control unit 405 of the reason for the impossibility of the connection in the notification in step S700 from connection destination candidates, the connection control unit 405 determines the connection destination. Control can be performed so that a base station that does not notify the connection control unit 405 of information indicating the reason for the impossibility of the connection and only notifies the connection control unit 405 that the connection is impossible is not excluded from the connection destination candidates until the number of retries reaches a predetermined number of times in the base station. By the above processing, if the connection control unit 405 is notified by a base station of information indicating the impossibility of a connection, particularly information indicating that the upper limit of the number of connections is reached, it is possible to prevent the connection to the base station having transmitted this notification from being retried.

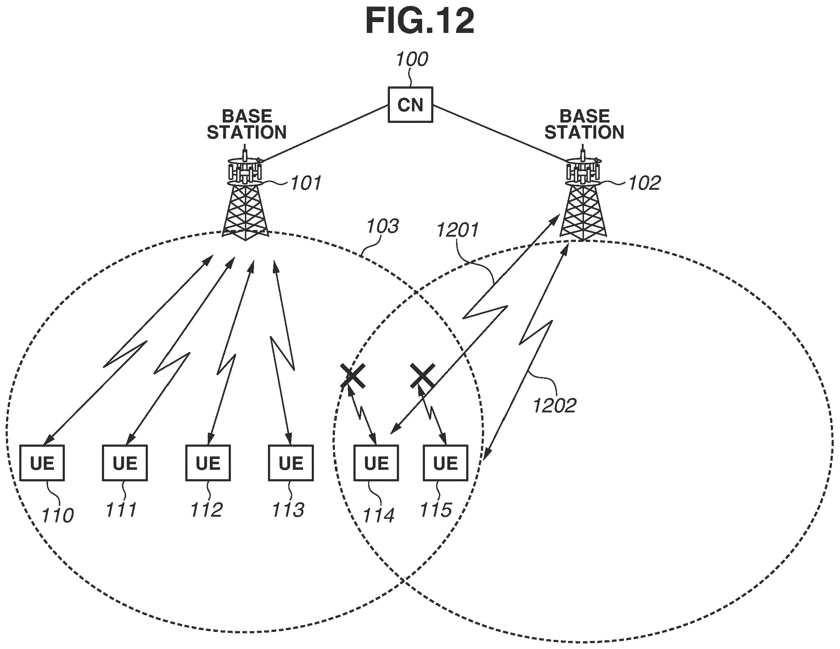

With reference to Fig. 12, the result of changing a base station as a connection destination is described. Fig. 12 is a schematic diagram illustrating the change of the connection destination. Similarly to Fig. 1, a case is illustrated where the UEs 110 to 115 are present in the cell 103 of the IAB node 101, and a total of four UEs, namely the UEs 110 to 113, are connected to the IAB node 101. If the UE 114 or 115 makes a connection request in this state, the IAB node 101 refuses the connection. At this time, the IAB node 101 transmits an RRC Reject message that refuses the connection by including information indicating that the upper limit of the number of connections is reached as the cause of the impossibility of the connection in the RRC Reject message.

The IAB node 101 also transmits an RRC Reject message including information regarding the IAB node 102 as information indicating a connection destination candidate.

As a result, the UE 114 or 115 executes the processes illustrated in Fig. 7. As indicated by a cell area 1201, the UEs 114 and 115 are located in the coverage area of the IAB node 102. Thus, it is determined that the connection conditions are satisfied also in terms of the communication quality. Then, in the cell area 1201 and a cell area 1202, the UEs 114 and 115 can attempt connections to the IAB node 102 as the connection candidate and switch the base station as the connection destination.

### <Second Exemplary Embodiment>

In the first exemplary embodiment, a description has been given of a mechanism for notifying outside of information indicating that the upper limit of the number of connections is reached, using an RRC Reject message and a BAP message. In a second exemplary embodiment, a description is given of a mechanism for giving a notification of information indicating that the upper limit of the number of connections is reached, using informing information of which an IAB node informs outside in addition to the processes described in the first exemplary embodiment.

The hardware configurations and the software configurations of the apparatuses are similar to those in the first exemplary embodiment, and therefore are not described. In the present exemplary embodiment, outside is informed of an SIB described in the first exemplary embodiment by including information indicating that the upper limit of the number of connections is reached in the SIB. A specific description is given below.

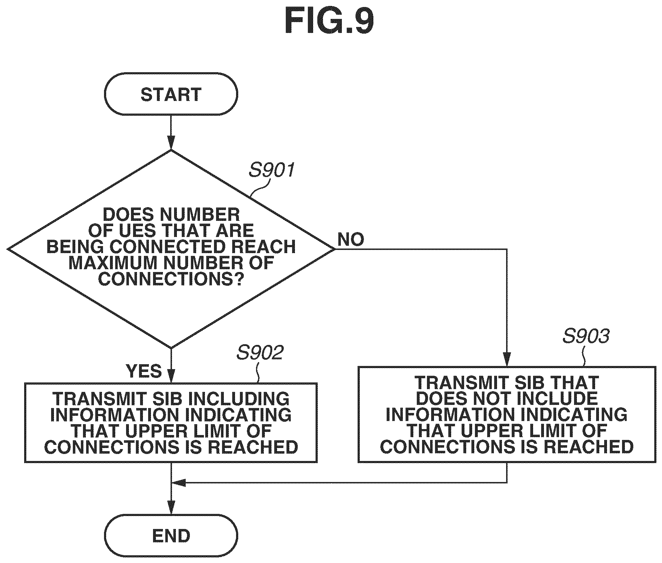

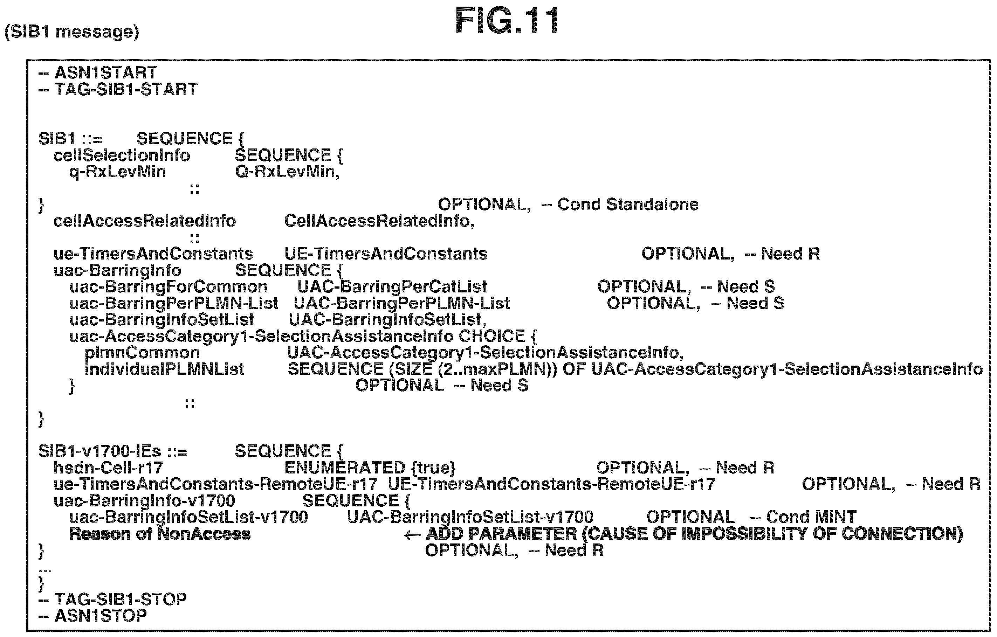

First, with reference to Figs. 9 and 11, a description is given of a determination process for determining a connection in an IAB node having received a connection request. A flowchart in Fig. 9 selectively illustrates an informing process for informing outside of an SIB that is periodically performed by the IAB node. The processing illustrated in the flowchart is achieved by the control unit 202 of the IAB node executing a program. In a case where it is to be clearly indicated what performs the processing, the description is given using a functional unit described with reference to Fig. 3 as the subject.

In step S901, based on the number of connections indicating the number of currently connected UEs managed by the connection management unit 306 and the information regarding the upper limit of the number of connections managed by the setting control unit 303, the informing control unit 308 determines whether the number of UEs that are being connected reaches the upper limit of the number of connections. If it is determined that the upper limit of the number of connections is reached, the processing proceeds to step S902. If it is not determined that the upper limit of the number of connections is reached, the processing proceeds to step S903.

In step S902, the informing control unit 308 generates informing information including information indicating that the upper limit of connections is reached. Next, the informing control unit 308 cooperates with the signal processing unit 302, the wireless communication unit 204, and the antenna control unit 205 to generate an SIB and a PBCH including the generated informing information and transmit the SIB and the PBCH as an SS/PBCH block to outside. With reference to Fig. 11, the specific content of the SIB is described. In the present exemplary embodiment, as an example, the information indicating that the upper limit of connections is reached is stored in a System Information Block Type 1 (SIB1).

With reference to Fig. 11, a description is given of the information of which outside is informed as the SIB1. In Fig. 11, the format of the informing information is indicated by the notation based on ASN.1. In the present exemplary embodiment, a notification of the information indicating that the upper limit of the number of connections is reached is given by extending a part of the informing information based on the SIB1 described in TS 38.331 V17.1.0.

Specifically, the structure of "Reason of NonAccess-IEs" that enumerates information indicating the cause of the impossibility of the connection and hint information in a case where the connection is impossible in the structure members is added to the structure members of "uac-BarringInfo-v1700". The information included in this structure is similar to that in the first exemplary embodiment and includes the information indicating that the upper limit of the number of connections is reached. That is, a notification of the information regarding "Detail Reason of NonAccess" described in the first exemplary embodiment is given, whereby it is possible to give a notification of information indicating whether the upper limit of connections is reached. A configuration can also be employed in which only the bit sequence of "Detail Reason of NonAccess" is added, and a notification is given using the SIB1.

A configuration can also be employed in which only 1-bit flag information indicating whether the upper limit of connections is reached is added to the SIB1. For example, if the flag is "1", this indicates that the upper limit of the number of connections is reached. If the flag is "0", this indicates that the upper limit of the number of connections is not reached. In this case, in step S902, the informing control unit 308 may generate informing information in which "1" is set in an area where the flag is stored.

The description returns to Fig. 9. In step S903, the informing control unit 308 generates informing information that does not include information indicating that the upper limit of connections is reached. Next, the informing control unit 308 cooperates with the signal processing unit 302, the wireless communication unit 204, and the antenna control unit 205 to generate an SIB and a PBCH including the generated informing information and transmit the SIB and the PBCH as an SS/PBCH block to outside.

In this case, the informing control unit 308 generates informing information that does not include information elements after "Detail Reason of NonAccess" of "Reason of NonAccess-IEs". A configuration can also be employed in which a notification of only the 1-bit flag information indicating whether the upper limit of connections is reached is given. In this case, the informing control unit 308 may generate informing information in which "0" is set in the area where the 1-bit flag information indicating whether the upper limit of connections is reached is stored.

By the above processing, an IAB node can notify outside of information indicating that the upper limit of the number of connections is reached.

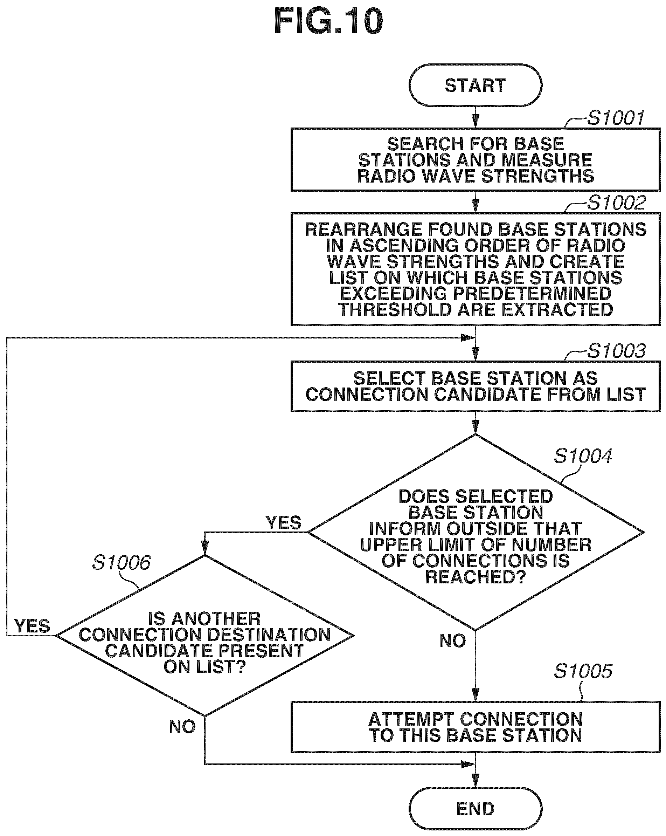

Next, with reference to a flowchart in Fig. 10, a description is given of control of a UE according to the second exemplary embodiment. The flowchart in Fig. 10 selectively illustrates the processes of searching for base stations and connecting to a base station that are executed in a case where the UE is not connected to a base station or a case where the UE performs a handover of a base station. The processing illustrated in the flowchart is achieved by the control unit 202 of the UE executing a program. In a case where it is to be clearly indicated what performs the processing, the description is given using a functional unit described with reference to Fig. 4 as the subject.

In step S1001, the collection unit 407 cooperates with the signal processing unit 402 and the control unit 202 and the communication unit 204 of the UE to search for surrounding base stations. Then, the collection unit 407 receives signals of SS/PBCH blocks emitted from surrounding base stations found by the search and also measures the qualities such as the received signal strengths of the signals. Next, the collection unit 407 stores information regarding the base stations included in the signals and the received signal strengths in association with each other. The collection unit 407 analyzes each SIB1 and also stores information regarding whether the base station informs outside of information indicating that the upper limit of the number of connections is reached.

In step S 1002, the connection control unit 405 generates a list on which the base stations found in step S1001 and the radio wave strengths are associated with each other. Then, the control unit 405 rearranges this list in ascending order and also generates a list of connection destination candidates on which only base stations exceeding a predetermined threshold are extracted. Based on the PLMN stored in the UE itself at this time, a base station provided by a carrier that is not allowed to make a connection is also excluded from the list of candidates.

Next, in step S1003, the connection control unit 405 selects a base station as a connection candidate from the list rearranged in ascending order. In the first selection, the control unit 405 sets an index indicating a reference destination on the list to 0 and selects a base station at the beginning of the list as a base station as a connection candidate.

By the process of step S1006, the index is incremented. Thus, in the second or subsequent selection, a base station stored at a position corresponding to the index value on the list is selected as a base station as a connection candidate.

In step S 1004, the connection control unit 405 determines whether the base station as the connection candidate is a base station informing outside of information indicating that the upper limit of the number of connections is reached. If it is determined that the base station as the connection candidate is a base station informing outside of information indicating that the upper limit of the number of connections is reached, the connection control unit 405 does not attempt a connection to the base station as the connection candidate, and the processing proceeds to step S1006. If it is determined that the base station as the connection candidate is not a base station informing outside of information indicating that the upper limit of the number of connections is reached, the processing proceeds to step S1005.

In step S1005, the connection control unit 405 attempts a connection to the base station as the connection candidate. The procedure of this connection is similar to the procedure described in the first exemplary embodiment.

On the other hand, in step S1006, the connection control unit 405 determines whether another connection destination candidate is present on the list. Specifically, the connection control unit 405 increments the index indicating the reference destination on the list and determines whether another connection destination candidate is present on the list. If it is determined that another connection destination candidate is present on the list, the processing proceeds to step S1003. If it is determined that the list ends, and a connection destination candidate to which a connection is not attempted is absent on the list, the series of processes ends.

By the above processing, a connection is not attempted to a base station informing outside of information indicating that the upper limit of the number of connections is reached, whereby it is possible to prevent an unnecessary connection process from being performed.

Although in the present exemplary embodiment, a case is illustrated where control is performed to determine whether to attempt a connection by the determination process in step S1004, the present invention is not limited to this. For example, as described below, a configuration can also be employed in which, when the extraction process in step S1002 is performed, a base station informing outside of information indicating that the upper limit of the number of connections is reached is excluded from the extraction targets. In this case, in step S1002, the connection control unit 405 may further perform an extraction process for excluding from the list a base station informing outside of information indicating that the upper limit of the number of connections is reached.

### <Third Exemplary Embodiment>

In the first and second exemplary embodiments, descriptions have been given of methods for preventing a connection by giving a notification of information indicating that the upper limit of the number of connections is reached. In a third exemplary embodiment, a mechanism for, in a case where the number of UEs that are being connected to an IAB node reaches the upper limit of the number of connections, stopping the transmission of informing information utilized to search for a cell when a new UE makes a connection is provided. With this mechanism, it is possible to prevent a new UE from attempting a connection to this IAB node. A specific control method is described below. The hardware configurations and the software configurations of the IAB donor, the wireless base stations such as the IAB nodes, and the UEs are similar to those in the first and second exemplary embodiments, and therefore are not described. The differences from the first and second exemplary embodiments are mainly described.

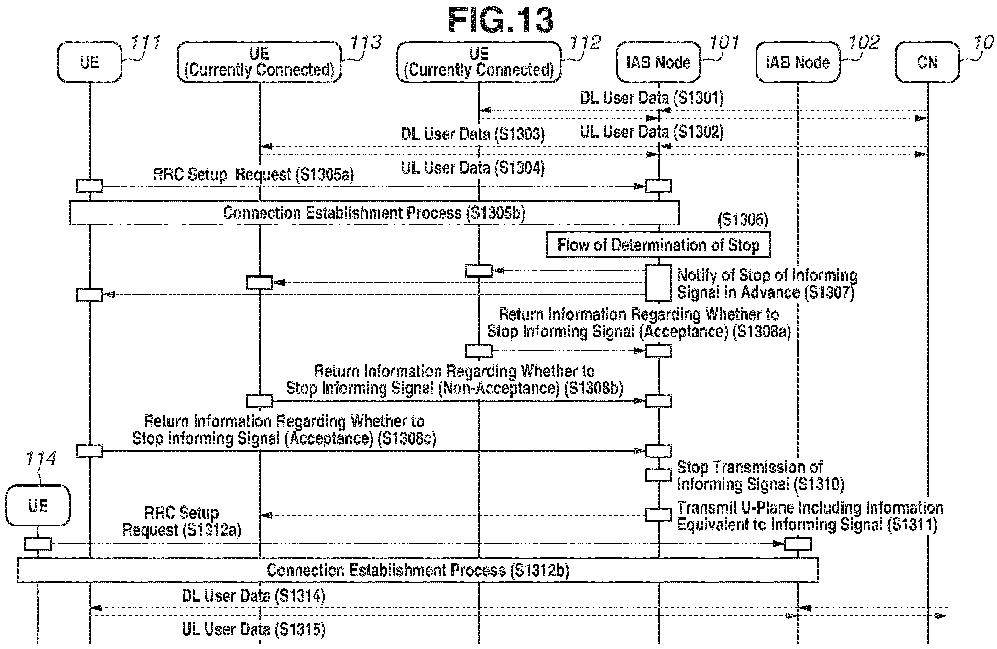

First, with reference to Fig. 13, a description is given of control for preventing an attempt to make a connection according to the present exemplary embodiment. Fig. 13 is a sequence diagram illustrating an example of the control for preventing an attempt to make a connection according to the third exemplary embodiment. First, preconditions are described. The UEs 112 and 113 are UEs connected to the cellular communication network via the IAB node 101. Thus, in steps S1301 and S1302, the UEs 112 and 113 can communicate downlink user plane data with the CN 10. In steps S1303 and S1304, the UEs 112 and 113 can communicate uplink user plane data with the CN 10. Although not illustrated due to space limitations, other UEs are also connected to the IAB node 101, and the UEs that are being connected to the IAB node 101 reach "the upper limit of the number of connections - 1" in this state. The subsequent processing is described using as an example a case where the UE 111 newly connects to the IAB node 101.

In step S1305a, the UE 111 transmits an RRC Setup Request message that requests the IAB node 101 to set up a connection. In step S1305b, the IAB node 101 having received the RRC Setup Request message performs a UE connection establishment sequence similar to that in step S505 and subsequent steps in Fig. 5 in the first exemplary embodiment (the connection process described in section 9.2.1.3 of TS 38.300).

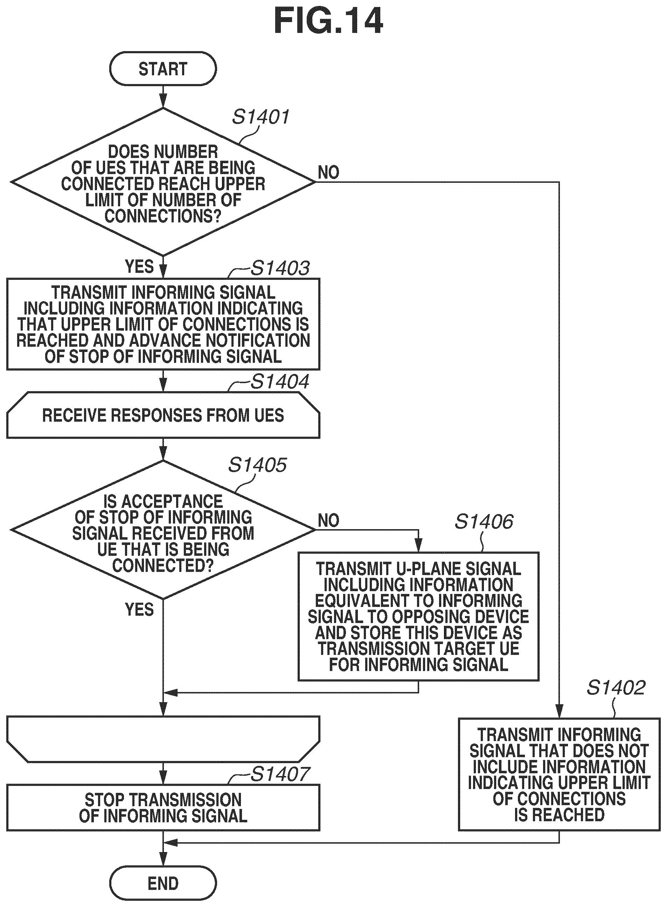

Next, in step S1306, based on the upper limit of the number of connections and the number of currently connected UEs, the IAB node 101 determines whether to stop the periodic transmission of informing information utilized to search for a cell when a new UE makes a connection. The specific determination method of the IAB 101 node will be described below with reference to a flowchart in Fig. 14. The following sequence illustrates processing in a case where the periodic transmission of the informing information utilized to search for a cell when a new UE makes a connection is stopped.

If it is determined that the periodic transmission of the informing information utilized to search for a cell is to be stopped, then in step S1307, similarly to the second exemplary embodiment, the IAB node 101 informs the UEs present within the range of the cell that the informing signal is scheduled to be stopped, using an extended additional area of an SIB 1.

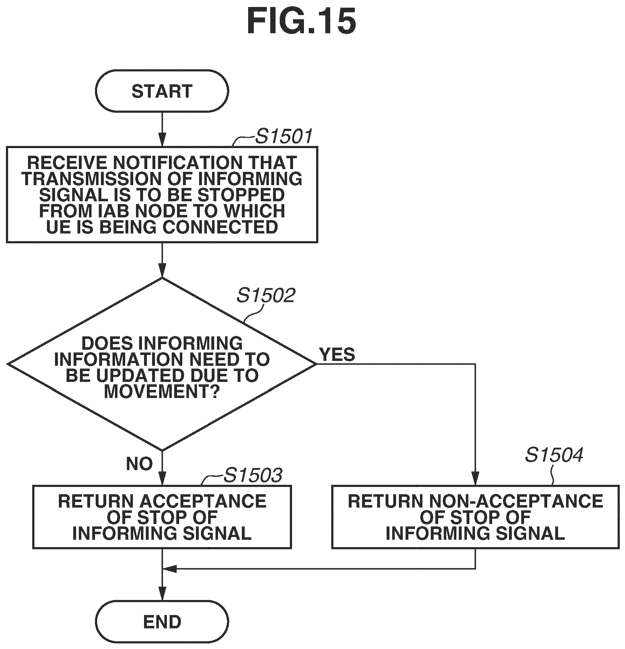

In steps S1308a to S1308c, each UE that is being connected and has received this information returns a response indicating whether the informing signal can be stopped. In the present exemplary embodiment, as an example, a case is illustrated where the UEs 112 and 111 return acceptance, and the UE 113 returns non-acceptance. The determination process for determining whether the informing signal can be stopped in each UE will be described below with reference to a flowchart in Fig. 15, and therefore is briefly described here. For example, a UE moving gradually away from the base station in the direction of an end portion of the coverage area of the cell determines that information regarding the informing signal is required. Then, the UE transmits an RRC message including information indicating that the stop is not accepted (non-acceptance). The UE moving in such a direction is in the situation where the received radio wave strength of radio waves from the base station weakens. Thus, the UE requires informing information which is related to another base station and of which the IAB node 101 informs outside for a handover, and therefore returns non-acceptance to the notification that gives notice of the stop.

In step S1310, the IAB node 101 having received the responses from all the UEs that are being connected stops the transmission of the informing signal.

Next, in step S1311, the IAB node 101 performs the process of transmitting user plane (U-plane) data to the UE (e.g., the UE 113) having returned non-acceptance regarding whether the informing signal can be stopped, by including information equivalent to the informing signal in the U-plane data. More specifically, the IAB node 101 includes the information equivalent to the informing signal in a payload area of Service Data Adaptation Protocol (SDAP). The IAB node 101 also allocates a bit for detecting the inclusion of data equivalent to the informing signal to a header area, thereby conveying the UE that the SDAP includes the information equivalent to the informing signal. The above technique for transmitting the information equivalent to the informing signal to the UE is merely an example, and is not limited to this. For example, the technique can also be modified so that a data frame including the data equivalent to the informing signal in a header area is transmitted.

Next, a description is given of a sequence in which a peripheral UE connects to a base station after the transmission of the informing signal is stopped. A case is assumed where the UE 114 moves to the coverage areas of the IAB nodes 101 and 102. The UE 114 attempts the search process and the connection process according to the second exemplary embodiment described with reference to Fig. 10. At this time, the IAB node 101 stops the transmission of the informing signal at the timing of step S1310. Thus, the IAB node 101 is not found in the search process by the UE 114. As a result, in steps S1312a and S1312b, the UE 114 detects the IAB node 102 that is another IAB node as a base station to which the UE 114 can connect. Then, the UE 114 transmits an RRC Setup Request message to the IAB node 102 and executes a connection establishment process.

If the connection establishment process is completed, then in steps S1314 and S1315, the UE 114 communicates downlink user plane data with the CN 10 via the IAB node 102 and the IAB donor 100.

Next, with reference to Fig. 14, a description is given of a determination process related to the stop of informing information in an IAB node according to the present exemplary embodiment. A flowchart in Fig. 14 selectively illustrates control of the transmission of an informing signal that is periodically performed by the IAB node. The processing illustrated in the flowchart is achieved by the control unit 202 of the IAB node executing a program. In a case where it is to be clearly indicated what performs the processing, the description is given using a functional unit described with reference to Fig. 3 as the subject.

In step S1401, based on the number of connections indicating the number of currently connected UEs managed by the connection management unit 306 and the information regarding the upper limit of the number of connections managed by the setting control unit 303, the informing control unit 308 determines whether the number of UEs that are being connected reaches the upper limit of the number of connections. If it is determined that the upper limit of the number of connections is reached, the processing proceeds to step S1403. If it is not determined that the upper limit of the number of connections is reached, the processing proceeds to step S1402.

In step S1402, the informing control unit 308 generates informing information that does not include information indicating that the upper limit of connections is reached. Next, the informing control unit 308 cooperates with the signal processing unit 302, the wireless communication unit 204, and the antenna control unit 205 to generate an SIB and a PBCH including the generated informing information and transmit the SIB and the PBCH as an SS/PBCH block to outside. In this case, the informing control unit 308 generates and transmits informing information that does not include information elements after "Detail Reason of NonAccess" of "Reason of NonAccess-IEs" described with reference to Fig. 11 in the second exemplary embodiment.

On the other hand, in step S1403, the informing control unit 308 generates informing information including information indicating that the upper limit of connections is reached and information indicating that the informing signal is scheduled to be stopped. Next, the informing control unit 308 cooperates with the signal processing unit 302, the wireless communication unit 204, and the antenna control unit 205 to generate an SIB and a PBCH including the generated informing information and transmit the informing signal as an SS/PBCH block to outside. Specifically, the informing control unit 308 further adds information such as "Pre-Notification-of-BCH Txstop" indicating that the informing signal is scheduled to be stopped to "Reason of NonAccess-IEs" described with reference to Fig. 11 in the second exemplary embodiment.

Next, in steps S1404 to S1406, the control unit 202 performs the process of waiting for responses to the advance notification message regarding the stop of the informing signal from all the UEs that are being connected to the IAB node 102. In step S1404, based on whether responses are received from all the UEs, the control unit 202 determines whether to repeat the response reception process. If responses are not received from all the UEs, the control unit 202 determines that the response reception process is to be repeated. Then, the processing proceeds to step S1406. If responses are received from all the UEs, it is determined that the response reception process is to be ended. Then, the processing proceeds to step S1407.

In step S1405, the control unit 202 receives a response from a UE and also determines whether the response indicates acceptance. If the received response indicates acceptance that accepts the stop of the informing signal, the control unit 202 records the reception of the response from this UE in a management list and repeats the process of receiving a response from another UE and a determination process for determining whether signals are received from all the UEs that are being connected. This management list is used to determine whether signals are received from all the UEs that are being connected. If, on the other hand, the received response indicates non-acceptance that does not accept the stop of the informing signal, the processing proceeds to step S1406. In step S1406, the control unit 202 transmits U-plane data including information equivalent to the informing signal to the UE from which the response indicating non-acceptance is received, and also stores the UE as a UE as a transmission target of the informing signal.

Finally, in step S1407, the control unit 202 stops the transmission process for transmitting the informing signal, and the series of processes ends. Also after the transmission process for transmitting the informing signal is stopped, the control unit 202 periodically transmits the U-plane data including the information equivalent to the informing signal to the UE stored as the UE as the transmission target of the informing signal in step S1406. In a case where the number of connections changes from the state where the upper limit of the number of connections is reached to the state where the upper limit of the number of connections is not reached due to the withdrawal of a UE, the control unit 202 stops informing outside of the information equivalent to the informing signal using the U-plane data and also resumes the transmission process for broadcasting the informing signal to the surroundings using an SIB.

Finally, with reference to a flowchart in Fig. 15, a description is given of control of a UE that is being connected to an IAB node and has received from the IAB node a message including information indicating that an informing signal is scheduled to be stopped. The flowchart in Fig. 15 selectively illustrates processing in a case where the UE receives information indicating that an informing signal is scheduled to be stopped from a base station such as an IAB node. The processing illustrated in the flowchart is achieved by the control unit 202 of the UE executing a program. In a case where it is to be clearly indicated what performs the processing, the description is given using a functional unit described with reference to Fig. 4 as the subject.

In step S1501, the connection control unit 405 cooperates with the signal processing unit 402 to receive an SS/PBCH block message including information indicating that an informing signal is scheduled to be stopped. If the reception is completed, the processing proceeds to step S1502. In step S1502, the connection control unit 405 determines whether the current state is the state where the informing information received from a base station such as an IAB node in step S1501 needs to be updated. Specifically, based on the movement state of the connection control unit 405 itself and the reception state of radio waves from the base station, the connection control unit 405 determines whether the connection control unit 405 itself is moving in a direction away from the base station and the current situation is the situation where a decrease in the communication quality is expected. If it is determined that the current situation is the situation where a decrease in the communication quality is expected, the connection control unit 405 determines that the informing information needs to be updated. Then, the processing proceeds to step S1504. If, on the other hand, it is determined that the current situation is not the situation where a decrease in the communication quality is expected, the connection control unit 405 determines that the informing information does not need to be updated. Then, the processing proceeds to step S1503. The specific technique for determining whether the current state is the state where the informing information needs to be updated is not limited to this.

Using only information related to the possibility of movement to an end portion of the coverage area of the cell, such as the moving velocity of the terminal itself, it may be determined whether the current state is the state where the informing information needs to be updated.

In step S1503, the connection control unit 405 transmits a message including acceptance indicating that the stop of the informing signal is accepted to the base station such as the IAB node that is the transmission source of the informing signal. On the other hand, in step S1504, the connection control unit 405 transmits a message including non-acceptance indicating that the stop of the informing signal is not accepted to the base station such as the IAB node that is the transmission source of the informing signal. The messages in steps S 1503 and S 1504 may be transmitted using RRC messages.

The UE having once transmitted the message including acceptance indicating that the stop of the informing signal is accepted may periodically make a determination equivalent to that in step S 1502 and transmit a request to start a transmission process for transmitting the informing information using U-plane according to the determination result to the base station. The IAB node having received this request may periodically transmit U-plane data including information equivalent to the informing signal to the transmission source of the request of the UE. By this processing, if the UE having once agreed with the stop changes to the situation where the informing information needs to be updated due to a change over time, it is possible to provide information equivalent to the informing information to the changed UE using U-plane.

By the above processing, in a case where the number of UEs that are being connected to an IAB node reaches the upper limit of the number of connections, it is possible to stop informing outside of informing information utilized to search for a cell when a new UE makes a connection. Thus, it is possible to prevent a new UE from attempting a connection to the IAB node in which the upper limit of the number of connections is reached. To a UE that is being connected and cannot accept the stop of the informing information, it is possible to provide information equivalent to the informing information by unicast using data communication based on U-plane.

### <Variations>

Although in the first and second exemplary embodiments, cases have been illustrated where a base station that gives a notification of information indicating that the upper limit of the number of connections is reached is an IAB node or a mobile IAB node, the present invention is not limited to this. If the operation of a mobile IAB node and the temporary installation of an IAB node are prevalent, uncertainty increases in terms of changes in communication load, and it is also possible that some measures are required in a fixed base station. For example, it is also possible that due to the movement of the mobile IAB node or the removal of the temporarily installed IAB node, communication demand of which the mobile IAB node or the temporarily installed IAB node has temporarily taken charge surges into the fixed base station. Based on this, a configuration can be employed in which control is performed to also notify a fixed base station, a fixedly installed IAB node, and a fixedly installed IAB donor of information indicating that the upper limit of the number of connections is reached.

The disclosure of the present exemplary embodiments includes the following configurations.

### <Other Exemplary Embodiments>

The present invention can also be achieved by the process of supplying a program for achieving one or more functions of the above exemplary embodiments to a system or an apparatus via a network or a storage medium, and of causing one or more processors of a computer of the system or the apparatus to read and execute the program. The present invention can also be achieved by a circuit (e.g., an ASIC or an FPGA) for achieving the one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Applications No. 2022-152857 filed September 26, 2022, and No. 2023-015589, filed February 3, 2023, which are hereby incorporated by reference herein.

### Description of the Reference Characters

- 100: IAB donor
- 101: IAB node
- 110: UE
- 202: control unit

## Claims

1. A communication apparatus that functions as a base station that performs cellular communication with user equipment (UE), the communication apparatus comprising:
a notification unit configured to, in a case where the number of connections to the base station reaches an upper limit of the number of connections, notify outside of information indicating that the upper limit of the number of connections is reached.

2. The communication apparatus according to claim 1, further comprising a setting unit configured to set the upper limit of the number of connections.

3. The communication apparatus according to claim 2, wherein the setting unit sets the upper limit of the number of connections based on a user operation through a screen.

4. The communication apparatus according to any one of claims 1 to 3, further comprising:
a management unit configured to manage information regarding UEs that are being connected to the base station; and
a determination unit configured to determine whether the number of UEs that are being connected managed by the management unit reaches the upper limit of the number of connections.

5. The communication apparatus according to any one of claims 1 to 4, wherein the notification unit notifies a UE having attempted a connection to the base station that the upper limit of the number of connections is reached, by including the information indicating that the upper limit of the number of connections is reached in a Radio Resource Control (RRC) message.

6. The communication apparatus according to claim 5, wherein the RRC message including the information indicating that the upper limit of the number of connections is reached of which the notification unit notifies the UE is an RRC Reject message.

7. The communication apparatus according to any one of claims 1 to 5,
wherein the base station is an Integrated Access and Backhaul (IAB) node that uses a wireless resource for a backhaul line for an Integrated Access and Backhaul (IAB) donor, and
wherein the notification unit notifies the IAB donor of the information indicating that the upper limit of the number of connections is reached, using Backhaul Adaptation Protocol (BAP).

8. The communication apparatus according to claim 7, wherein the notification unit notifies the IAB donor of information indicating a radio wave condition of a peripheral communication apparatus and the information regarding the UEs that are being connected to the base station with the information indicating that the upper limit of the number of connections is reached, using the BAP.

9. The communication apparatus according to any one of claims 1 to 8, wherein the notification unit notifies outside of the information indicating that the upper limit of the number of connections is reached, using a Synchronization Signal block (SSB).

10. The communication apparatus according to claim 9, wherein in a case where the number of connections to the base station does not reach the upper limit of the number of connections, information of which the notification unit notifies outside using the SSB does not include the information indicating that the upper limit of the number of connections is reached.

11. The communication apparatus according to any one of claims 1 to 10, wherein even in a case where the upper limit of the number of connections is not reached, but in a case where congestion is occurring, the notification unit notifies outside of second information indicating that the congestion is occurring.

12. A communication apparatus that performs cellular communication, the communication apparatus comprising:
a measurement unit configured to measure a radio wave strength of a radio wave emitted from a surrounding base station; and
a connection unit configured to connect to a base station that satisfies a condition regarding a radio wave strength,
wherein the connection unit does not attempt a connection to a base station that satisfies the condition regarding the radio wave strength, but informs outside of information indicating that an upper limit of connections is reached.

13. The communication apparatus according to claim 12, further comprising:
a reception unit configured to receive informing information of which a base station informs outside using a Synchronization Signal block (SSB); and
a determination unit configured to determine whether the informing information received by the reception unit includes information indicating that the upper limit of connections is reached.

14. A control method for controlling communication, the control method comprising:
in a case where the number of connections to a base station that provides cellular communication reaches an upper limit of the number of connections, notifying outside of information indicating that the upper limit of the number of connections is reached.

15. A control method for controlling a communication apparatus that performs cellular communication, the control method comprising:
measuring a radio wave strength of a radio wave emitted from a surrounding base station; and
connecting to a base station that satisfies a condition regarding a radio wave strength,
wherein an attempt to make a connection to a base station that satisfies the condition regarding the radio wave strength, but informs outside of information indicating that an upper limit of connections is reached is not made.

16. A program for causing a computer to execute the control method according to claim 14 or 15.

17. A communication apparatus that functions as a base station that performs cellular communication with user equipment (UE), the communication apparatus comprising:
a transmission unit configured to transmit informing information including at least information used to search for the base station to outside using a Synchronization Signal block (SSB); and
a control unit configured to, in a case where the number of connections to the base station reaches an upper limit of the number of connections, perform control to stop the transmission of the informing information from the transmission unit.
